# EUROPEAN PATENT SPECIFICATION

(11) **EP 4 552 740 B1**
(45) Date of publication and mention of the grant of the patent: **25.11.2026**
(21) Application number: 23884315.5
(22) Date of filing: 21.07.2023
(51) Int. Cl.: B01L 3/00, G01N 21/78, G01N 21/03

(54) **MICROFLUIDIC PAPER-BASED CHIP, MICROFLUIDIC TEST SYSTEM, LIQUID TEST METHOD, AND USE**
MIKROFLUIDISCHER CHIP AUF PAPIERBASIS, MIKROFLUIDISCHES TESTSYSTEM, FLÜSSIGKEITSTESTVERFAHREN UND VERWENDUNG
PUCE MICROFLUIDIQUE À BASE DE PAPIER, SYSTÈME DE TEST MICROFLUIDIQUE, PROCÉDÉ DE TEST DE LIQUIDE, ET UTILISATION

(30) Priority: 04.11.2022 CN 202211379392; 04.11.2022 CN 202222939918 U; 04.11.2022 CN 202222939919 U; 04.11.2022 CN 202211379390
(43) Date of publication of application: 14.05.2025
(73) Proprietor: China Petroleum & Chemical Corporation, Beijing 100728 (CN); Sinopec Research Institute of Safety Engineering Co., Ltd., Qingdao, Shandong 266104 (CN)
(72) Inventor: JIANG, Huiyun, Qingdao, Shandong 266104 (CN); JIN, Yan, Qingdao, Shandong 266104 (CN); WANG, Shiqiang, Qingdao, Shandong 266104 (CN); FENG, Junjie, Qingdao, Shandong 266104 (CN); ZHU, Liang, Qingdao, Shandong 266104 (CN); XIAO, Anshan, Qingdao, Shandong 266104 (CN); SUN, Bing, Qingdao, Shandong 266104 (CN); AN, Fei, Qingdao, Shandong 266104 (CN); WANG, Haozhi, Qingdao, Shandong 266104 (CN)
(74) Representative: Hoffmann Eitle
(86) International application number: PCT/CN2023/108659
(87) International publication number: WO 2024/093376

(56) References cited:
- EP-A1- 2 589 435
- AU-A1- 2010 221 117
- CN-A- 107 570 244
- CN-A- 109 877 472
- CN-A- 112 067 595
- CN-A- 113 405 992
- CN-B- 104 841 499
- CN-U- 206 082 558
- CN-U- 206 082 558
- KR-A- 20170 120 893
- US-A1- 2016 258 020
- US-A1- 2022 193 662

## Description

### CROSS REFERENCE TO RELATED APPLICATIONS

The present application claims the benefits of Chinese Patent Application Nos. 202211379392.8, 202222939918.5, 202222939919.X and 202211379390.9 filed on Nov. 4, 2022.

### FIELD

The present disclosure relates to microfluidic test technology, in particular to a microfluidic paper-based chip. On that basis, the present disclosure further relates to a microfluidic test system comprising the microfluidic paper-based chip and a liquid test method using the microfluidic paper-based chip. In addition, the present disclosure further relates to a use of the microfluidic paper-based chip, the microfluidic test system and the liquid test method.

### BACKGROUND

Microfluidic technology has a wide application prospect in the fields of water quality test, environmental test, and food and medical treatment owing to its advantages of fast mass and heat transfer, high analysis efficiency, low reagent consumption, low analysis cost, environmental friendliness and easy integration, and easy adaptation to small-size portable test and analysis instruments. Although microfluidic technology provides a new development direction for test and analysis instruments such as portable water quality testers, the problems in microfluidic technology, such as additional fluid control requirements and large-size test equipment, bring new difficulties to the portability of instruments.

Microfluidic paper-based chips can successfully overcome the problems in fluid control. Microfluidic paper-based chips, referred to as "paper chips" for short, are technical platforms for microfluidic analysis that rely on capillary force to achieve self-driving. Compared with microfluidic chips based on other materials, paper chips have the advantages of low cost and high portability, and have great potential in the fields of water quality test, environmental test and food and medical treatment. With the continuous development and progress of the camera technology and software functions of smart phones, through taking pictures of the test cell of a paper chip with a portable mobile phone, chromaticity identification and colorimetric analysis can be carried out with the built-in software, avoiding the use of additional signal analysis instruments. The combination of paper chips with photographing and analysis with mobile phones can promote the further development of test instruments in portability.

However, owing to the limited reagent carrying capacity, inhomogeneity of paper material and problems of insufficient color rendering, poor uniformity and poor repeatability caused by capillary action (e.g., a coffee ring effect), the sensitivity and detection limit of paper chip test are low, and the accuracy and repeatability are insufficient, which have become common problems restricting the development of paper chip test technology.

A paper chip test technology has been described in AU 2010/221117 A1, which discloses a method of patterning porous, hydrophilic substrates into hydrophobic and hydrophilic regions. KR 2017-0120893 A discloses a biosensor, and an apparatus and method for manufacturing the same. EP 2 589 435 A1 describes a component for use in a three-dimensional microfluidic device and a method of manufacturing said component. US 2022/0193662 A1 relates to a sample analysis device, and in particular to such a sample analysis device for measurements of rolling circle amplification products. CN 104 841 499 A discloses a paper-based digital micro-fluidic device.

In order to improve the sensitivity and accuracy of paper chip tests, researchers have made great efforts, such as designing two-way liquid feed channels, prearranging a reagent at two sides of the test cell, and employ a way of loading samples from two sides, so that the reagent can be driven by the liquid to be tested to enter the test cell from the two sides, the diffusion of chromaticity toward the periphery of the test cell can be reduced, thereby the chromaticity uniformity of the test cell can be improved. For another example, an enrichment function of the coffee ring effect can be utilized to acquire the chromaticity on the coffee ring generated after a chromogenic reaction, so that the detection limit of the target is limited. In addition, in the prior art, it is also proposed to utilize the adsorption of noble metal nanoparticles and carbon quantum dots on the target, and load these adsorbing substances on paper chips to enrich the target, so as to improve the test sensitivity. However, the above method still has some defects: improving the chromatic uniformity can make the chromaticity distributed evenly, but it can't improve the test sensitivity or decrease the detection limit; when sample spots are taken by coffee ring enrichment for quantification, the color sampling position can't be fixed owing to the randomness and variability of coffee ring formation, consequently the chromaticity difference is great due to the variation of color sampling position, and the accuracy, repeatability and operability of test can't be ensured.

### SUMMARY

The object of the present disclosure is to provide a microfluidic paper-based chip, a microfluidic test system and a liquid test method, in order to overcome the problems that the detection limit and test sensitivity can't meet the requirements and the test accuracy and repeatability are low owing to insufficient chromaticity and uneven chromaticity dispersion of paper chips for colorimetric quantification in the prior art. The microfluidic paper-based chip and the liquid test method have high detection accuracy and sensitivity, can effectively decrease the lower detection limit during a liquid test, and have high operability and repeatability.

To attain the above object, in a first aspect, the present disclosure provides a microfluidic paper-based chip, which comprises a paper-based layer that is provided with a test cell, which has a first contact angle region and a second contact angle region therein, and is arranged as follows: the contact angle of a liquid in the test cell in the first contact angle region is greater than the contact angle of the liquid in the second contact angle region.

In a second aspect, the present disclosure provides a microfluidic test system comprising the microfluidic paper-based chip described above. The microfluidic test system may further comprise a regulation and control unit for controlling one or more of ambient temperature, air flow rate, humidity and vacuum degree in the area where the test cell is located.

In a third aspect, the present disclosure provides a liquid test method, which comprises: S1. introducing a liquid to be tested into the test cell of the microfluidic paper-based chip described above; S2. keeping the microfluidic paper-based chip being stationary for a predetermined time; and S3. carrying out chromaticity identification and/or colorimetric analysis on a predetermined region in the test cell.

In a fourth aspect, the present disclosure provides a use of the above-mentioned microfluidic paper-based chip, microfluidic test system or liquid test method in water quality test, environmental test, and food and medical treatment.

With the technical scheme described above, according to the mechanism of chroma migration on a paper chip, through arranging a first contact angle region and a second contact angle region that have different contact angles in a test cell, the surface tension of the liquid is regulated and controlled, so that the liquid has a driving force pointing to the inside of the liquid drop, and thus contracts from the first contact angle region to the second contact angle region having a smaller contact angle, so as to drive the chroma to migrate to the second contact angle region to be enriched, thereby increasing the chromaticity and uniformity on unit area while the concentrations of target objects to be tested are the same, improving the test sensitivity and lowering a detection limit, and additionally enlarging the point taking range and improving the point taking operability and the test repeatability.

### BRIEF DESCRITION OF THE DRAWINGS

Fig. 1 is a schematic diagram of the microfluidic paper-based chip according to a preferred embodiment of the present disclosure;
Fig. 2 is a test effect diagram of the microfluidic paper-based chip according to a preferred embodiment of the present disclosure;
Fig. 3 is a schematic diagram of gradient distribution in different contact angle regions of the test cell of the microfluidic paper-based chip according to a preferred embodiment of the present disclosure;
Fig. 4 is a schematic exploded view of the microfluidic paper-based chip according to another preferred embodiment of the present disclosure;
Fig. 5 is a scatter diagram showing the relationship between chroma enrichment effect and vent hole diameter;
Fig. 6 is a schematic diagram of the microfluidic paper-based chip according to another preferred embodiment of the present disclosure;
Fig. 7 is a diagram showing the test effect of the microfluidic paper-based chip in Fig. 6;
Fig. 8 is a comparative diagram of chroma enrichment effects of different microfluidic paper-based chips;
Fig. 9 is a schematic diagram of the microfluidic paper-based chip according to another preferred embodiment of the present disclosure;
Fig. 10 shows the distribution of test cells of the microfluidic paper-based chip according to another preferred embodiment of the present disclosure;
Fig. 11 is a scatter diagram showing the relationship between chroma enrichment effect and detection time at different ambient temperatures;
Fig. 12 is a schematic exploded view of the microfluidic paper-based chip according to Embodiment 1 of the present disclosure;
Fig. 13 is a schematic diagram of the chroma enrichment effect of the microfluidic paper-based chip in Fig. 12;
Fig. 14 is a schematic structural diagram of the microfluidic paper-based chip according to Embodiment 2 of the present disclosure;
Fig. 15 is a schematic diagram of the chroma enrichment effect of the microfluidic paper-based chip in Fig. 14; and
Figs. 16 and 17 are quantitative curves of the microfluidic paper-based chip according to Embodiment 3 of the present disclosure, respectively.

### DETAILED DESCRIPTION

Some embodiments of the present disclosure will be detailed below with reference to the accompanying drawings. It may be understood that the embodiments described herein are only provided to describe and explain the present disclosure, but are not intended to constitute any limitation on the present disclosure.

The end points and any value in the ranges disclosed in the present disclosure are not limited to the exact ranges or values; instead, those ranges or values shall be understood as encompassing values that are close to those ranges or values. For numeric ranges, combinations may be made between the end points of the ranges, between the end points of the ranges and the discrete point values, and between the discrete point values to obtain one or more new numeric ranges, which shall be deemed as having been disclosed specifically herein.

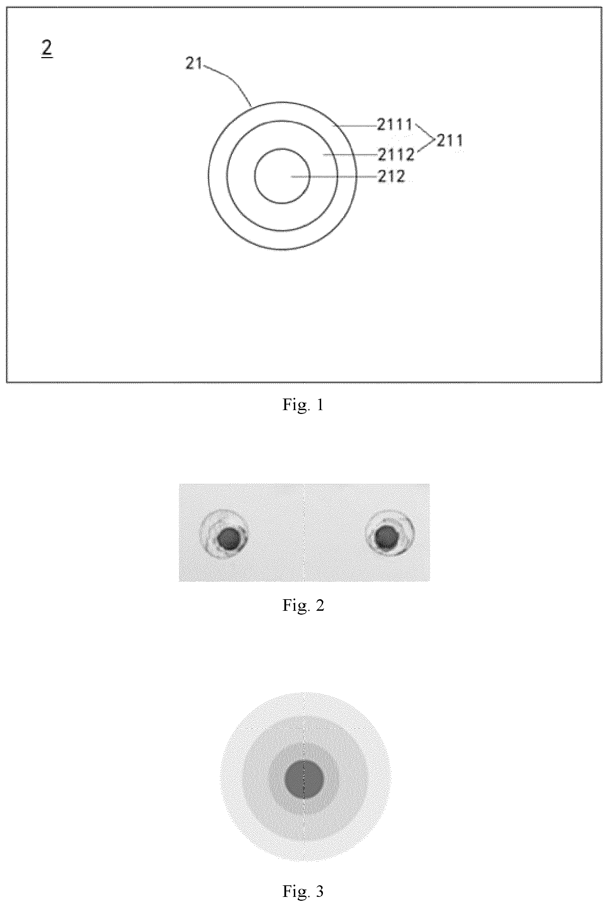

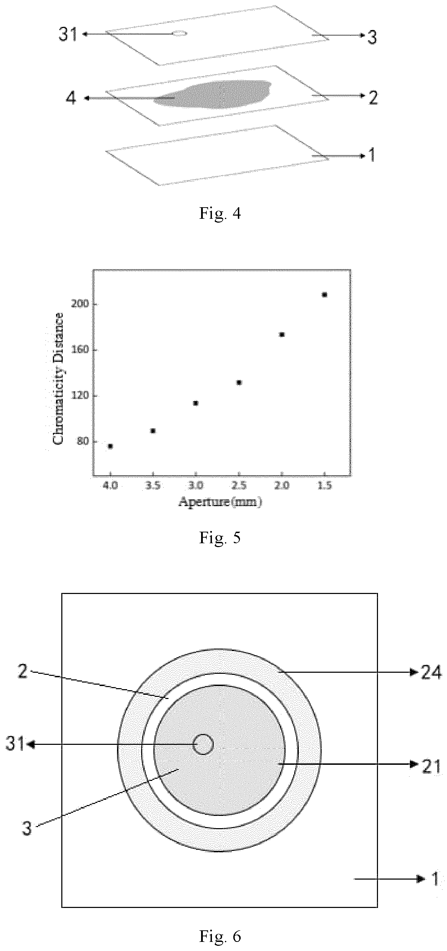

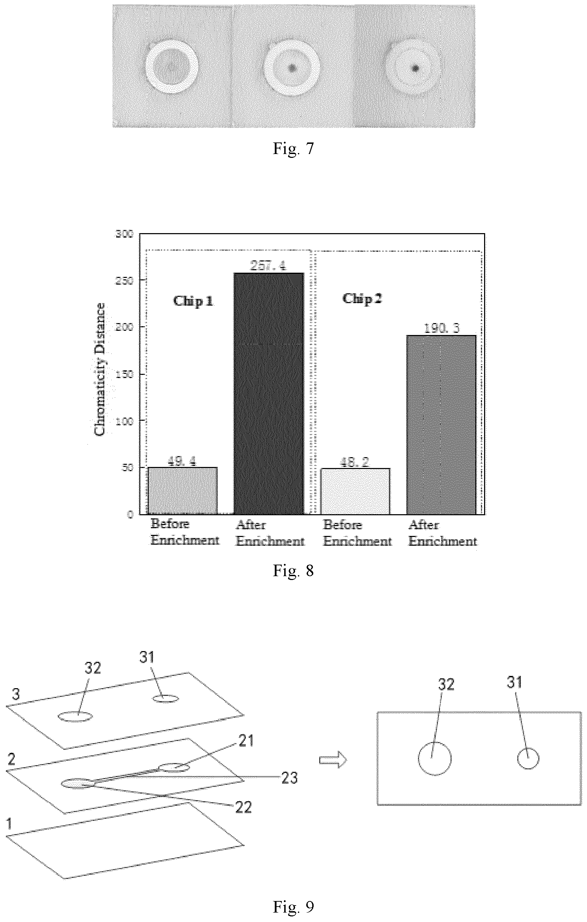

As shown in Fig. 1, in a first aspect, the present disclosure provides a microfluidic paper-based chip, which comprises a paper-based layer 2, which may be made of a paper/paper-based material such as filter paper and cellulose filter membrane, and serves as a technical platform for microfluidic analysis such as liquid test. Compared with ordinary microfluidic chips, the microfluidic paper-based chip provided herein has the advantages of low cost, no need for external driving, high biocompatibility and high portability. The microfluidic paper-based chip may be provided with one or more paper-based layers 2 therein, and usually there is no particular restriction on the thickness of the paper-based layers 2. In the embodiments shown in the accompanying drawings of the present disclosure, in order to clearly show the related structures, only one paper-based layer 2 is schematically shown (as shown in Figs. 4 and 9).

A test cell 21 is formed on the paper-based layer 2 of the microfluidic paper-based chip, and the liquid to be tested (e.g., sewage, food or medicine solution) can be introduced into the test cell 21 to detect/analyze the information of the liquid, such as constituents and concentrations of the constituents, by means of chromaticity identification and colorimetric analysis, etc., which will be described later. In the present disclosure, as shown in Fig. 1, the test cell 21 has a first contact angle region 211 and a second contact angle region 212 therein, and the contact angle of the tested liquid introduced into the test cell 21 in the first contact angle region 211 is greater than the contact angle of the liquid in the second contact angle region 212.

Thus, after the liquid to be tested is introduced into the test cell 21, the surface tension of the liquid to be tested can be regulated and controlled by different contact angle regions in the test cell 21, so that the liquid has a driving force directed to the inside of the liquid droplet, thereby contracts from the first contact angle region 211 toward the second contact angle region 212 having a smaller contact angle, so as to drive the chroma to migrate to the second contact angle region for enrichment. With the arrangement of different contact angle regions, the microfluidic paper-based chip in the present disclosure can improve the chromaticity and uniformity on unit area at the same concentration of the target, thereby improves the test sensitivity and decreases the detection limit, and enlarges the point taking range and improves the point taking operability and test repeatability as well.

It is understood that the contact angles of the liquid to be tested in different regions in the test cell 21 refer to the contact angles of water in these regions. Therefore, although the microfluidic paper-based chip in the present disclosure doesn't contain the liquid to be tested, the same liquid to be tested has different wetting abilities to different contact angle regions of the test cell 21, so it has different contact angles in these regions. For example, the water contact angle of the first contact angle region 211 may be set to be greater than 90 degrees, thereby it is difficult for water or hydrophilic liquids to wet the region; the water contact angle of the second contact angle region 212 may be set to be smaller than 30 degrees. Thus, after the liquid to be tested is introduced into the test cell 21, owing to the relatively large contact angle of the first contact angle region 211, the liquid to be tested in the test cell 21 generate a driving force directed to the second contact angle region 212 in the evaporation process, which urges the droplet to contract toward the second contact angle region 212. With the evaporation of water in the liquid to be tested, the contraction process can drive chroma to migrate toward the second contact angle region 212, so that the liquid is concentrated into a spot having higher chromaticity in the second contact angle region 212 in the test cell 21, thus it is convenient to carry out chromaticity identification and colorimetric analysis with a portable test instrument (e.g., a smart phone with built-in software). Fig. 2 shows a test effect diagram of the microfluidic paper-based chip in the present disclosure, in which the first contact angle region 211 surrounds the second contact angle region 212 and has a water contact angle of 91 degrees, and the second contact angle region 212 is circular and has a diameter of 2 mm. It can be seen that the arrangement of different contact angle regions makes the test cell have a good chroma enrichment effect, thereby the test sensitivity is improved and the detection limit is decreased, the point taking range is enlarged, the point taking operability and test repeatability are improved, and it is convenient to perform chromaticity identification and colorimetric analysis.

In the present disclosure, the first contact angle region 211 and the second contact angle region 212 may be formed in the test cell 21 in many different ways. For example, a hydrophobic material may be laid, deposited or infiltrated in a part of the test cell 21 near the periphery, thereby the first contact angle region 211 is formed, and/or a hydrophilic material may be laid, deposited or infiltrated in a central part of the test cell 21, thereby the second contact angle region 212 is formed. Specifically, a PTFE film may be laid in the part of the test cell 21 near the periphery, or a hydrophobic material, such as a silylating reagent or fluorine-containing material, may be deposited or infiltrated on the surface of the part, so that a first contact angle region 211 having a large contact angle can be obtained by isolating the solution to be tested from the substrate of the paper-based layer or modifying the substrate of the paper-based layer by hydrophobic modification; in the central part of the test cell 21, no treatment is needed, the hydrophilic second contact angle region 212 may be formed from a material such as filter paper or cellulose filter membrane of the paper-based layer, or the surface of this part can be treated with plasma or coated with a bovine serum albumin (BSA) solution, etc., and the contact angle can be decreased by surface modification, so as to form a second contact angle region 212 having a smaller contact angle. In a preferred embodiment, the contact angle of the entire test cell 21 is increased by laying a PTFE film in the test cell 21, or depositing or infiltrating a hydrophobic material such as a silylating reagent or fluorine-containing material, so as to form a hydrophobic layer having a larger contact angle. Then, in the central part of the test cell 21, a second contact angle region 212 with a smaller contact angle is formed by laying, depositing or infiltrating a hydrophilic material (e.g., laying a piece of filter paper or coating a BSA material) on top of the hydrophobic layer, while the remaining part in the test cell 21 is the first contact angle region 211.

In the test cell 21 of the microfluidic paper-based chip in the present disclosure, the first contact angle region 211 may be configured to have a water contact angle greater than 60 degrees, preferably greater than 90 degrees, more preferably greater than 120 degrees; the second contact angle region 212 may be configured to have a water contact angle smaller than 30 degrees or even close to 0 degrees. Thus, the solution in the test cell 21 will converge toward the second contact angle region 212 with the evaporation process, so that the chroma is enriched in the second contact angle region 212 and a spot is formed, thereby a liquid at a low concentration can be effectively detected, the test sensitivity is improved, and the detection limit is decreased.

It is seen from the above description that in the present disclosure, by arranging regions having different contact angles in the test cell 21, the chroma is enriched in a specific region, so that the position of the test point can be selected as required, and depends on the position of the second contact angle region 212 in the test cell 21. In the preferred embodiment shown in the figures, the test cell 21 is formed into a circle in diameter of 2 mm to 8 mm, and the second contact angle region 212 is located at the center of the test cell 21, so that the tested liquid introduced into the test cell 21 can uniformly converge in all directions toward the center of the circle, which is beneficial for improving the test accuracy and precision. In an alternative embodiment, the second contact angle region 212 may be located at a different position in the test cell 21, for example, in a central part offset from the center of the circle, and the first contact angle region 211 surrounds the second contact angle region 212. Alternatively, the test cell 21 may be formed as a regular polygon having a circumcircle in diameter of 2 mm to 8 mm, and the second contact angle region 212 is arranged at the center of the regular polygon.

According to the mechanism of chroma migration in the test cell 21, the size and enrichment degree of the spot formed through chroma enrichment largely depend on the size of the second contact angle region 212. That is to say, if the second contact angle region 212 is relatively small, the degree of chroma enrichment will be relatively high, and the spot formed will be relatively small, which is more conducive to the test of a low-concentration solution. Therefore, the size of the second contact angle region 212 can be determined according to the size of the test cell 21, so that the area of the second contact angle region 212 in the test cell 21 doesn't exceed 50%, preferably doesn't exceed 30%. For an ordinary test cell (a circle in diameter of 2 mm to 8 mm or a regular polygon having a circumcircle in diameter of 2 mm to 8 mm), the second contact angle region 212 may be configured as a circular region in diameter of 0.5 mm to 5 mm (preferably 1 mm to 3 mm) or a regular polygonal region having a circumcircle in diameter of 0.5 mm to 5 mm (preferably 1 mm to 3 mm).

As shown in Fig. 1 and Fig. 3, in order to enhance the effect of chroma enrichment and uniform distribution, for the microfluidic paper-based chip in the present disclosure, multi-step contact angle regions may be arranged in the test cell 21, so that the contact angle in the test cell 21 increases in steps from the center to the periphery of the test cell 21, thereby contact angle regions having different contact angles in a gradient distribution are formed. Specifically, the first contact angle region 211 may comprise a first gradient region 2111 near the periphery of the test cell 21 and a second gradient region 2112 near the second contact angle region 212. The contact angle of the second gradient region 2112 is smaller than that of the first gradient region 2111, so that the driving force in the direction from the periphery of the test cell 21 to the second contact angle region 212 gradually decreases during the evaporation of the liquid, and the liquid can move to the second contact angle region 212 at a gradually decreased acceleration, which is conducive to uniform distribution of chroma in the second contact angle region 212. Fig. 3 shows the gradient distribution of different contact angle regions of the test cell. It can be understood that the first contact angle region 211 including two gradient regions is only exemplary; and more gradient regions can be arranged in the test cell 21 for the microfluidic paper-based chip in the present disclosure.

In the microfluidic paper-based chip of the present disclosure, the test cell 21 may be arranged to be open to the outside, and the volatile components in the liquid to be tested can be directly evaporated through an upper opening of the test cell 21 till the chroma is enriched in the second contact angle region 212. On that basis, the present disclosure can also control the direction and speed of chroma migration by controlling the localized volatilization of the liquid to be tested, and further improve the chroma enrichment effect in the test cell, which will be described in detail below.

As shown in Fig. 4, a microfluidic paper-based chip according to the present invention comprises the abovementioned paper-based layer 2 provided with a test cell (not shown), and a cover layer 3 and a bottom layer 1 respectively provided on the top side and bottom side of the paper-based layer 2. The bottom layer 1 is arranged to cover the bottom side (first side) of the paper-based layer 2 by bonding or other means, and the cover layer 3 is arranged to cover the top side (second side) of the paper-based layer 2 by bonding or other means. The cover layer 3 and the bottom layer 1 may completely or only partially cover the test cell to form water-impermeable and air-permeable parts. For example, the cover layer 3 and the bottom layer 1 may be entirely made of a water-impermeable and air-permeable material, or the part covering the test cell is made of a water-impermeable and air-permeable material. Specifically, the water-impermeable and air-permeable material herein may be polyvinyl chloride, polyethylene, polypropylene, polystyrene, silicone, or polytetrafluoroethylene, etc.; or the cover layer 3 and the bottom layer 1 made of a water-permeable material may be subjected to hydrophobic treatment, for example, coating wax on filter paper and heating, so that the wax infiltrates into the filter paper, or the filter paper is immersed in a solution of plastics dissolved in an organic solvent and then is dried. The bottom layer 1 and the cover layer 3 may or may not be in contact with each other, and their areas and shapes are not required to be the same, nor are they required to be larger than the paper-based layer 2, but they may cover the test cell completely. In addition, the bottom layer 1 and the cover layer 3 may be made of a transparent or opaque material, preferably a transparent material.

A vent hole 31 is formed in the part of the cover layer 3 covering the test cell, thereby the liquid 4 in the test cell is allowed to volatilize locally through the vent hole 31. Thus, the vent hole 31 can guide the liquid 4 in the test cell to converge to the position of the vent hole 31 during evaporation, so that the chroma is enriched at that position. Specifically, the cover layer 3 covers the peripheral portion of the test cell, thereby preventing the liquid 4 from evaporating from the periphery of the test cell; besides, the test cell communicates with the external space through the vent hole 31 in the cover layer 3, so that the liquid in the test cell can only evaporate outward through the vent hole 31. Thus, in the evaporation process, the moisture in the position close to the vent hole 31 in the test cell evaporates faster, and the moisture near the periphery replenishes to the position close to the vent hole 31, so that the chroma is carried to migrate to the position and a spot with rich chroma is formed.

In that case, the position of the vent hole 31 relative to the test cell may be configured appropriately, for example, the position of the vent hole 31 corresponds to the position of the second contact angle region 212 in the test cell (on the same vertical line), thereby the enrichment of chroma in the test cell can be effectively enhanced, so as to decrease the detection limit and improve the test sensitivity.

To that end, the vent hole 31 may be configured to have the same shape and size as the second contact angle region 212, and its area and aperture are smaller than the second contact angle region 212. For example, the vent hole 31 may be a regular polygon or a circle, and its diameter or circumcircle diameter may be 0.5 mm to 5 mm, preferably 1 mm to 3 mm. The vent hole 31 may be arranged above the center of the test cell, so as to make the chroma evenly enriched during the evaporation of the liquid in the test cell.

In addition, the aperture size of the vent hole 31 has an important influence on the chroma enrichment effect. As shown in Fig. 5, within a certain range (before the chromaticity reaches saturation), the smaller the aperture size of the vent hole, the higher the chromaticity of the finally formed spot is. For example, in the case that the vent hole is in diameter of 3 mm, the chromaticity (distance) after enrichment is only about 120; in the case that the aperture of the vent hole is 1.5 mm, the chromaticity (distance) after enrichment can be 200 or above. Therefore, in order to achieve a better chroma enrichment effect, the diameter of the vent hole 31 or the circumcircle diameter may be set to 1 mm to 3 mm, but a longer enrichment time may be required. Therefore, the evaporation of the liquid can be accelerated by regulating and controlling the environmental temperature, humidity and vacuum degree in the area where the test cell is located, which will be explained later.

Fig. 6 shows an improved embodiment of the microfluidic paper-based chip in the present disclosure, which provides a chip structure having a gain function. Specifically, the microfluidic paper-based chip is provided with a liquid reservoir 24 arranged around the test cell 21 on the paper-based layer 2, so that when the liquid in the test cell 21 can't completely migrate to the vicinity of the vent hole 31 owing to an excessively high evaporation rate, a colorless liquid may be added into the liquid reservoir 24 to replenish the liquid to be evaporated in the test cell 21, thereby continuously driving the chroma to migrate to the vicinity of the vent hole 31. As a channel or channels for replenishing liquid, one or more openable and closable liquid replenishing holes may be formed in a part of the cover layer 3 covering the liquid reservoir 204, and the liquid replenishing holes may be opened when liquid replenishment is required and closed after liquid replenishment is completed. In the actual test, the colorless liquid added to the liquid reservoir 24 can be water or a mixture of different solvents, but the added liquid may be able to dissolve/carry chroma and will not interact with other parts of the chip. The test effect of the microfluidic paper-based chip with the liquid reservoir 24 is shown in Fig. 7. Fig. 8 shows a comparison of the chroma enrichment effect between a microfluidic paper-based chip with the liquid reservoir 24 and microfluidic paper-based chip without the liquid reservoir 24. It can be seen that the degree of chroma enrichment near the vent hole can be significantly improved by adding supplementary liquid into the liquid reservoir 24. Under the same conditions, a chip without the liquid reservoir (Chip 2) can enrich the chroma from 48.2 to 190.3, while a chip with the liquid reservoir (Chip 1) can enrich the chroma from 49.4 to 257.4.

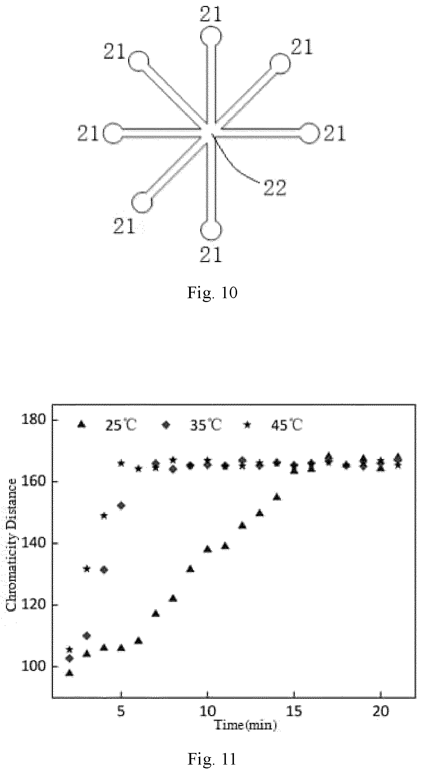

In some embodiments of the present disclosure, the liquid to be tested can be directly added into the test cell 21 from above, for example, the vent hole 31 can be used as a sample loading hole. In some other embodiments, a sample loading region 22 may be arranged at another position of the paper-based layer 2 apart from the test cell 21, and the sample loading region 22 and the test cell 21 are in communication through a diffusion channel 23; correspondingly, a sample loading hole 32 may be arranged at a position corresponding to the sample loading region 22 on the cover layer 3, as shown in Fig. 9. Thus, the liquid to be tested can be injected into the sample loading region 22 through the sample loading hole 32, and enter the test cell 21 through the diffusion channel 23 under a self-driving action, and then the subsequent chroma enrichment and test process can be carried out. In some embodiments of the present disclosure, as shown in Fig. 10, a number of test cells 21 may be provided, and the specific number may be determined according to the number of samples to be tested and/or the number of parameters to be tested. The test cells 21 are preferably at the distance to the sample loading region 22, which is to say, the diffusion channels 23 are in the same length; seven test cells 21 are arranged around the central sample loading region 22; thus, when it is necessary to test multiple samples in parallel or repeat the test for several times, the task can be completed through one chip test process. Thus, the test throughput is improved, the error between parallel experiments is further decreased.

In order to facilitate the test, a chromogenic reagent may be prearranged in the test cell 21 or the diffusion channel 23, and the chromogenic reagent can make the liquid in the test cell 21 show an obvious color, for example, through chemical reaction, so as to carry out chromaticity identification and colorimetric analysis.

In a second aspect, the present disclosure provides a microfluidic test system including the abovementioned microfluidic paper-based chip, and the microfluidic test system may have associated devices such as a chip carrier, a camera, etc., which are used in association with the microfluidic paper-based chip.

Particularly, for a microfluidic paper-based chips with a vent hole, the microfluidic test system may be equipped with a regulation and control unit for regulating and controlling one or more of environmental temperature, air flow rate, humidity and vacuum degree in the area where the test cell 21 is located, and the evaporation rate of the liquid in the test cell 21 can be controlled by adjusting these environmental factors to improve the chroma enrichment effect. For example, a heating plate for heating the ambient temperature in the area where the test cell 21 is located may be provided, to keep the ambient temperature of the area where the test cell 21 is located within a predetermined temperature range of 35°C to 45°C. Fig. 11 shows the relationship between chromaticity distance and detection time at ambient temperatures of 25°C, 35°C and 45°C, in which it can be seen that the chroma enrichment rate at ambient temperatures of 35°C and 45°C is significantly higher than that at 25°C, but the final enrichment degrees are essentially the same. Therefore, the test efficiency can be effectively improved by arranging an appropriate regulation and control unit.

The regulation and control unit can be configured to control other environmental factors besides the ambient temperature. For example, it may include a ventilation device, which can release pressurized air above the test cell 21 or replace the air above the test cell 21, so as to speed up the air flow rate around the vent hole 31 or reduce the humidity near the vent hole 31. Alternatively, the regulation and control unit may include a vacuum drying oven, and, in the test process, the microfluidic paper-based chip is placed in the vacuum drying oven for a predetermined duration to accelerate the chroma enrichment.

In a third aspect, the present disclosure provides a liquid test method based on the microfluidic paper-based chip. The liquid test method comprises the following steps: S1. introducing a liquid to be detected into the test cell 21 of a microfluidic paper-based chip; S2. holding the microfluidic paper-based chip still for a predetermined time; and S3. carrying out chromaticity identification and/or colorimetric analysis on a predetermined region in the test cell 21. The predetermined region is a chroma enrichment region in the test cell 21.

As described above, in order to accelerate the liquid evaporation rate and improve the chroma enrichment effect, one or more of the ambient temperature, humidity and vacuum degree of the area where the test cell 21 is located may be regulated and controlled in the above step S2; for example, the ambient temperature of the area where the test cell 21 is located may be regulated and controlled to be within a predetermined temperature range of 25°C to 60°C.

In a fourth aspect, the present disclosure provides a use of the above-mentioned microfluidic paper-based chip, microfluidic test system or liquid test method in water quality test, environmental test, and food and medical treatment. For example, the abovementioned microfluidic paper-based chip, microfluidic test system and liquid test method may be used to detect the contents of nickel, chromium, phosphate, etc. in water, or to determine various indicators in biomedicines and determine whether various substances in foods conform to application standards.

The microfluidic paper-based chip, the microfluidic test system and the liquid test method in the present disclosure can improve the accuracy of quantification and decrease the lower detection limit. Compared with the prior art, the present disclosure: 1) enhances the colorimetric intensity in the test cell during colorimetric quantification, so that the original color intensity at which the color reaction is weak or the color even invisible is enhanced, thereby the lower detection limit of the analyte is decreased; 2) improves the chromaticity on the paper chip as well as the distribution uniformity by regulating and controlling the chromaticity, so as to increase the range of point taking position, improve the operability, and further improve the accuracy and repeatability of test; 3) is realized in a simple way of three-dimensional structure design supplemented by material surface modification, without adding additional complex devices, thus ensuring the portability of the paper chip test; 4) is suitable for most paper chips based on colorimetric quantification and has high feasibility and universality.

The present disclosure will be described in detail in the following examples, in which the contact angle is measured with an OCA200 automatic single-fiber contact angle measurement instrument.

### Example 1

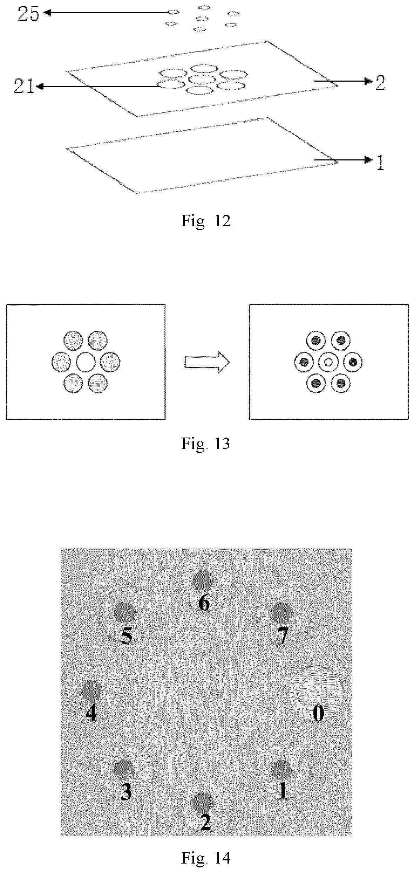

Fig. 12 shows the microfluidic paper-based chip in this example. The microfluidic paper-based chip comprises a bottom layer 1, a paper-based layer 2 and an enrichment layer 25. The paper-based layer 2 has six test cells 21 arranged in an annular array and a blank control test cell at the center; the enrichment layer 25 is an additional enrichment carrier located on each test cell 21, and the enrichment carrier is located in the central part (including but not limited to the center) of the test cell 21. The test cells 21 are made of a material having a larger contact angle (e.g., filter paper modified by a fluorine-containing silane reagent or a plastic sheet having a large contact angle intrinsically), and the enrichment carrier is made of a material having a smaller contact angle (e.g., filter paper, cellulose filter membrane or other material treated by plasma treatment or surface modification). The enrichment carrier is smaller than the test cell 21 in size and forms a second contact angle region having a smaller contact angle, preferably is in a circular or regular polygonal shape, and has a circumcircle in diameter of 1 mm to 3 mm; other parts in the test cell 21 form a first contact angle region having a larger contact angle. The enrichment carrier, the test cell and the bottom layer are bonded to each other by adhesive or other means.

Colored solutions obtained through a reaction (e.g., solutions obtained through mixing a dye solution at a concentration of 0.1%, analyte solutions at different concentrations, and a specific reagent) are added dropwise into the test cells arranged in a circular array, while a blank control is added into the central test cell. The chroma enrichment effect is shown in Fig. 13. After chroma enrichment under specific conditions (e.g., 35°C, 10 min.), the test cells are photographed under natural illumination, the RGB values of the photos are analyzed and the chroma distances D are calculated. The chromaticity of a red dye solution at a concentration of 0.1% after enrichment is shown in the following table:

| **Test Cell ID** | **Chromaticity Distance** |
|---|---|
| **1** | 205.6 |
| **2** | 208.3 |
| **3** | 205.3 |
| **4** | 202.8 |
| **5** | 203.7 |
| **6** | 207.1 |

### Example 2

In this embodiment, a paper chip having a three-layer structure is used as a basic chip for chroma enhancement, and an aqueous solution added with a dye is used as a sample. This example is used to prove that the present disclosure can achieve chroma enrichment for all color-based solutions, and prove that the chroma enrichment occurs in any small area in communication with the atmosphere without being coaxial with the sample loading hole.

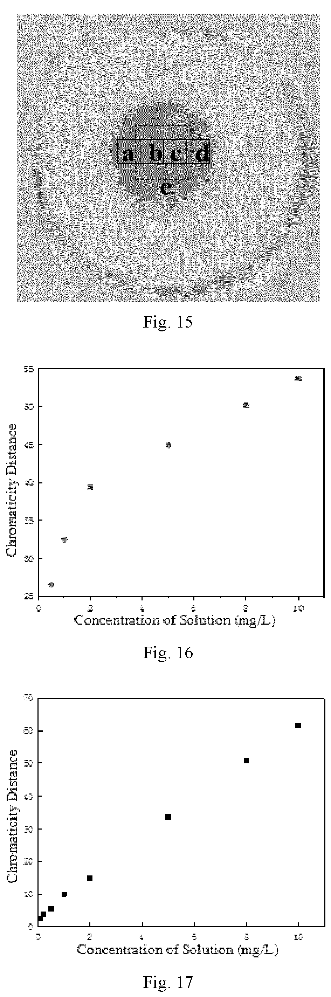

The structure of the paper chip is shown in Fig. 14, in which the top side and bottom side of a paper-based layer prepared with a cutting method are covered by a transparent air-impermeable film respectively, and the top film (cover layer) has vent holes at positions corresponding to the test cells. The sample loading holes are arranged at the same distance from the test cells. A dye solution is injected from the sample injection hole, is distributed along a hydrophilic diffusion channel and reaches each of the test cells 1-7. After the paper chip is kept under natural conditions (26°C ambient temperature, 70% humidity) for a time period (10 min. to 60 min.), the chroma is enriched in the vent hole area of each test cell. As time goes by, the chromaticity of the enriched region is more and more obvious than that in other regions. RGB values of chromaticity in different test cells and multiple regions in the same test cell are read, and the results are shown in the following table and Fig. 15 respectively:

| **Test Cell** | **0** | **1** | **2** | **3** | **4** | **5** | **6** | **7** |
|---|---|---|---|---|---|---|---|---|
| **R** | 254.7895 | 249.2449 | 246.7833 | 248.5084 | 243.5846 | 246.8047 | 241.3608 | 239.582 |
| **G** | 254.7895 | 107.4898 | 108.4875 | 104. 2395 | 105.8308 | 104.2781 | 102.9 922 | 110.7266 |
| **B** | 254.1199 | 175.5969 | 175.8625 | 168. 5084 | 167.3846 | 174.5503 | 168.7 333 | 171.3594 |
| | | | | | | | | |

| **Region** | | **a** | **b** | | **c** | **d** | | **e** |
|---|---|---|---|---|---|---|---|---|
| **R** | | 238.3956 | 245.303 | | 246.2727 | 240.7423 | | 243.053 |
| **G** | | 108.1978 | 109.7727 | | 116.5273 | 108.8635 | | 107.75 |
| **B** | | 165.8242 | 176.0833 | | 184.9091 | 174.4541 | | 168.7348 |

As can be seen from the above table, the R, G and B values are similar between different test cells and between different regions of the same test cell, and all standard deviations of the R, G and B values between different test cells and between different regions of the same test cell are lower than 3%, indicating that the chromaticity enhancement and liquid test method proposed by the present disclosure has high uniformity and repeatability.

### Example 3

This example is used to prove that the nickel detection limit in water is decreased owing to the chroma enrichment structure.

The bottom layer of the microfluidic paper-based chip used in this embodiment is a transparent air-impermeable film, the paper-based layer is a piece of hydrophobically modified filter paper (the sample loading region, the diffusion channel and the test cells are still hydrophilic, while the rest regions are modified to be hydrophobic; a compound reagent with dimethylglyoxime as the main substance, which can have a specific chromogenic reaction with nickel), and the cover layer is a transparent air-impermeable film, and is provided with a sample loading hole in communication with the sample loading region and a vent hole in communication with the test cells. The diameter of the test cells is 4 mm, and the aperture of the vent hole is 2 mm.

During the test, a nickel-containing water sample is injected from the sample loading hole, and the sample flows to the test cells along the diffusion channel and reacts with the compound reagent to generate a pink substance. After the chip is held for a time period, water vapor evaporates along the vent hole in the cover layer, the color-developing components diffuse and gather toward the chroma enrichment region under the driving of evaporation, and the color becomes deepened gradually. After the reaction is completed, the chroma enrichment region of the paper chip is photographed, the chromaticity information of this region is extracted by means of MATLAB, and then the quantitative calculation is carried out.

It can be seen from Figs. 16 and 17 that the detection limit of an ordinary paper chip has a high detection limit for nickel in water; after chroma enrichment, the detection limit for nickel in water is decreased to 0.1 mg/L, which is to say, the effect of decreasing the detection limit is obvious. Standard curve fitting is carried out for the nickel solution within a linear range, and the linearity of the fitted straight line is improved obviously.

### Example 4

This example is used to prove that the chromium detection limit in water is decreased owing to the chroma enrichment structure.

The bottom layer of the microfluidic paper-based chip used in this embodiment is a transparent air-impermeable film, the middle layer is a piece of hydrophobically modified filter paper (the sample loading region, the diffusion channel and the test cells are still hydrophilic, while the rest regions are modified to be hydrophobic; a compound reagent with diphenyl carbazide as the main constituent, which can have a specific chromogenic reaction with chromium), and the cover layer is a transparent air-impermeable film, and is provided with a sample loading hole in communication with the sample loading region and a vent hole in communication with the test cells. The diameter of the test cells is 4 mm, and the aperture of the vent hole is 2.5 mm.

During the test, a chromium-containing water sample is injected from the sample loading region, and the sample flows to the test cells along the diffusion channel and reacts with the compound reagent to generate a pink substance. After the chip is held for a time period, water vapor evaporates along the vent hole in the cover layer, the color-developing components diffuse and gather toward the chroma enrichment region under the driving of evaporation, and the color becomes deepened gradually.

The result indicates that the detection limit of chromium on an ordinary paper chip is 0.05 mg/L before chroma enrichment; the detection limit drops to 0.03 mg/L after enhanced color development based on the paper chip of this example.

### Example 5

This example is used to prove that the detection limit for nitrous acid in water is decreased owing to the chroma enrichment structure.

The bottom layer of the microfluidic paper-based chip used in this embodiment is a transparent air-impermeable film, the paper-based layer is a piece of hydrophobically modified filter paper (the sample loading region, the diffusion channel and the test cells are still hydrophilic, while the rest regions are modified to be hydrophobic; a Griess reagent, which can have a specific chromogenic reaction with nitrites, is arranged in advance in the test cells), and the cover layer is a transparent air-impermeable film, and is provided with a sample loading hole in communication with the sample loading region and a vent hole in communication with the test cells. The diameter of the test cells is 5 mm, and the aperture of the vent hole is 2 mm.

During the test, a chromium-containing water sample is injected from the sample loading region, and the sample flows to the test cells along the diffusion channel and reacts with the compound reagent to generate a pink substance. After the chip is held for a time period, water vapor evaporates along the vent hole in the cover layer, the color-developing components diffuse and gather toward the chroma enrichment region under the driving of evaporation, and the color becomes deepened gradually.

The result demonstrates that the detection limit of an ordinary paper chip for chromium is 0.1 mg/L before the chroma enrichment and is decreased to 0.05 mg/L after enhanced color development based on the paper chip in this example.

## Claims

1. A microfluidic paper-based chip, comprising a paper-based layer (2) that is provided with a test cell (21), which has a first contact angle region (211) and a second contact angle region (212) therein, and is arranged as follows: the contact angle of water in the test cell (21) in the first contact angle region (211) is greater than the contact angle of water in the second contact angle region (212),
wherein the microfluidic paper-based chip comprises a bottom layer (1) arranged on a first side of the paper-based layer (2) and a cover layer (3) arranged on a second side of the paper-based layer (2) opposite to the first side, the bottom layer (1) and the cover layer (3) have a water-impermeable and air-impermeable part covering the test cell (21), and the part of the cover layer (3) covering the test cell (21) has a vent hole (31) formed therein.

2. The microfluidic paper-based chip of claim 1, wherein the test cell (21) is provided therein with the first contact angle region (211) that is formed from a paved, deposited or infiltrated hydrophobic material, and/or the test cell (21) is provided therein with the second contact angle region (212) that is formed from a paved, deposited or infiltrated hydrophilic material.

3. The microfluidic paper-based chip of claim 1, wherein a hydrophobic layer is formed in the test cell (21) by paving, depositing or infiltrating a hydrophobic material in the test cell (21), and the second contact angle region (212) and the first contact angle region (211) surrounding the second contact angle region (212) are formed by paving, depositing or infiltrating a hydrophilic material on top of the hydrophobic layer in a central part of the test cell (21).

4. The microfluidic paper-based chip of claim 1, wherein the second contact angle region (212) is located in the central part of the test cell (21), and the first contact angle region (211) surrounds the second contact angle region (212).

5. The microfluidic paper-based chip of claim 4, wherein the first contact angle region (211) is arranged as follows: the contact angle of the water in the test cell (21) increases in the first contact angle region (211) from the second contact angle region (212) to the periphery of the test cell (21).

6. The microfluidic paper-based chip of claim 1, wherein the water contact angle of the first contact angle region (211) is greater than 60 degrees, preferably greater than 90 degrees, and more preferably greater than 120 degrees.

7. The microfluidic paper-based chip of claim 1, wherein the vent hole (31) is regular polygonal or circular, and its diameter or circumcircle diameter is 0.5 mm to 5 mm, preferably 1 mm to 3 mm.

8. The microfluidic paper-based chip of claim 1, wherein the position of the vent hole (301) on the cover layer (3) is align with the position of the second contact angle region (212) in the test cell (201).

9. The microfluidic paper-based chip of claim 1, wherein the paper-based layer (2) is further provided with a sample loading region (22) and a diffusion channel (23) connecting the sample loading region (22) to the test cell (21);
the cover layer (3) is provided with a sample loading hole (32) at a position corresponding to the sample loading region (22); and
a chromogenic reagent is pre-arranged in the test cell (21) and/or the diffusion channel (23).

10. The microfluidic paper-based chip of claim 1, wherein the paper-based layer (2) is further provided with a liquid reservoir (24) that is arranged around the test cell (21) and used for replenishing liquid to the test cell (21).

11. A microfluidic test system, comprising the microfluidic paper-based chip of any of claims 1-10.

12. The microfluidic test system of claim 11, further comprising a regulation and control unit for controlling one or more of ambient temperature, air flow rate, humidity and vacuum degree in the area where the test cell (21) is located.

13. A liquid test method, comprising the following steps:
S1. introducing a liquid to be tested into a test cell (21) of the microfluidic paper-based chip of any of claims 1-10;
S2. keeping the microfluidic paper-based chip being stationary for a predetermined time;
S3. carrying out chromaticity identification and/or colorimetric analysis on a predetermined region in the test cell (21).

14. The liquid test method of claim 13, wherein, in step S2, the ambient temperature of the area where the test cell (21) is located is between 25°C and 60°C, and/or the regulation and control unit is utilized to regulate and control one or more of the ambient temperature, humidity and vacuum degree in the area where the test cell (21) is located.

## Patentansprüche

1. Mikrofluidischer Chip auf Papierbasis, umfassend eine papierbasierte Schicht (2), die eine Testzelle (21) aufweist, die darin einen ersten Kontaktwinkelbereich (211) und einen zweiten Kontaktwinkelbereich (212) aufweist und die wie folgt angeordnet ist: der Kontaktwinkel von Wasser in der Testzelle (21) in dem ersten Kontaktwinkelbereich (211) ist größer als der Kontaktwinkel von Wasser in dem zweiten Kontaktwinkelbereich (212),
wobei der mikrofluidische Chip auf Papierbasis eine Unterschicht (1), angeordnet auf einer ersten Seite der papierbasierten Schicht (2), und eine Deckschicht (3), angeordnet auf einer der ersten Seite gegenüberliegenden zweiten Seite der papierbasierten Schicht (2), umfasst, wobei die Unterschicht (1) und die Deckschicht (3) einen wasserundurchlässigen und luftundurchlässigen Abschnitt aufweisen, der die Testzelle (21) bedeckt, und der die Testzelle (21) bedeckende Teil der Deckschicht (3) ein darin ausgebildetes Lüftungsloch (31) aufweist.

2. Mikrofluidischer Chip auf Papierbasis gemäß Anspruch 1, wobei die Testzelle (21) einen ersten Kontaktwinkelbereich (211) darin aufweist, der aus einem gepflasterten, abgeschiedenen oder infiltrierten hydrophoben Material gebildet ist, und/oder die Testzelle (21) darin einen zweiten Kontaktwinkelbereich (212) aufweist, der aus einem gepflasterten, abgeschiedenen oder infiltrierten hydrophilen Material gebildet ist.

3. Mikrofluidischer Chip auf Papierbasis gemäß Anspruch 1, wobei in der Testzelle (21) eine hydrophobe Schicht durch Pflastern, Abscheiden oder Infiltrieren eines hydrophoben Materials in der Testzelle (21) gebildet ist, und der zweite Kontaktwinkelbereich (212) und der erste Kontaktwinkelbereich (211), der den zweiten Kontaktwinkelbereich (212) umgibt, durch Pflastern, Abscheiden oder Infiltrieren eines hydrophilen Materials oben auf die hydrophobe Schicht in einem zentralen Teil der Testzelle (21) gebildet sind.

4. Mikrofluidischer Chip auf Papierbasis gemäß Anspruch 1, wobei sich der zweite Kontaktwinkelbereich (212) im zentralen Teil der Testzelle (21) befindet und der erste Kontaktwinkelbereich (211) den zweiten Kontaktwinkelbereich (212) umgibt.

5. Mikrofluidischer Chip auf Papierbasis gemäß Anspruch 4, wobei der erste Kontaktwinkelbereich (211) wie folgt angeordnet ist: der Kontaktwinkel des Wassers in der Testzelle (21) nimmt in dem ersten Kontaktwinkelbereich (211) von dem zweiten Kontaktwinkelbereich (212) zum Rand der Testzelle (21) hin zu.

6. Mikrofluidischer Chip auf Papierbasis gemäß Anspruch 1, wobei der Wasserkontaktwinkel des ersten Kontaktwinkelbereichs (211) größer als 60 Grad, bevorzugt größer als 90 Grad und mehr bevorzugt größer als 120 Grad ist.

7. Mikrofluidischer Chip auf Papierbasis gemäß Anspruch 1, wobei das Lüftungsloch (31) regelmäßig polygonal oder kreisförmig ist und sein Durchmesser oder der Durchmesser des Umkreises 0,5 mm bis 5 mm, bevorzugt 1 mm bis 3 mm, beträgt.

8. Mikrofluidischer Chip auf Papierbasis gemäß Anspruch 1, wobei die Position der Lüftungsöffnung (301) auf der Deckschicht (3) sich mit der Position des zweiten Kontaktwinkelbereichs (212) in der Testzelle (201) auf einer Linie befindet.

9. Mikrofluidischer Chip auf Papierbasis gemäß Anspruch 1, wobei die papierbasierte Schicht (2) ferner einen Probenauftragsbereich (22) und einen Diffusionskanal (23), der den Probenauftragsbereich (22) mit der Testzelle (21) verbindet, aufweist;
die Deckschicht (3) an einer dem Probenauftragsbereich (22) entsprechenden Position mit einer Probenauftragsöffnung (32) versehen ist; und
ein chromogenes Reagenz in der Testzelle (21) und/oder dem Diffusionskanal (23) vorab angeordnet ist.

10. Mikrofluidischer Chip auf Papierbasis gemäß Anspruch 1, wobei die papierbasierte Schicht (2) ferner ein Flüssigkeitsreservoir (24) aufweist, das um die Testzelle (21) herum angeordnet ist und zum Nachfüllen von Flüssigkeit in die Testzelle (21) dient.

11. Mikrofluidisches Testsystem, umfassend den mikrofluidischen Chip auf Papierbasis gemäß einem der Ansprüche 1-10.

12. Mikrofluidisches Testsystem gemäß Anspruch 11, ferner umfassend eine Regel- und Steuereinheit zur Steuerung von einem oder mehr von Umgebungstemperatur, Luftdurchsatz, Luftfeuchtigkeit und Vakuumgrad in dem Bereich, in dem sich die Testzelle (21) befindet.

13. Flüssigkeitstestverfahren, umfassend die folgenden Schritte:
S1. das Einbringen einer zu untersuchenden Flüssigkeit in eine Testzelle (21) des mikrofluidischen Chips auf Papierbasis gemäß einem der Ansprüche 1-10;
S2. das Belassen des mikrofluidischen Chips auf Papierbasis für eine vorbestimmte Zeit;
S3. das Durchführen einer Farbidentifizierung und/oder kolorimetrischen Analyse an einem vorbestimmten Bereich in der Testzelle (21).

14. Flüssigkeitstestverfahren gemäß Anspruch 13, wobei in Schritt S2 die Umgebungstemperatur des Bereichs, in dem sich die Testzelle (21) befindet, zwischen 25°C und 60°C liegt und/oder die Regel- und Steuereinheit verwendet wird, um die Umgebungstemperatur, die Luftfeuchtigkeit und/oder den Vakuumgrad in dem Bereich, in dem sich die Testzelle (21) befindet, zu regeln und zu steuern.

## Revendications

1. Puce microfluidique à base de papier, comprenant une couche à base de papier (2) qui est pourvue d'une cellule de test (21), qui présente en son sein une première région d'angle de contact (211) et une deuxième région d'angle de contact (212), et est disposée comme suit : l'angle de contact de l'eau dans la cellule de test (21) dans la première région d'angle de contact (211) est supérieur à l'angle de contact de l'eau dans la deuxième région d'angle de contact (212),
dans laquelle la puce microfluidique à base de papier comprend une couche de fond (1) disposée sur un premier côté de la couche à base de papier (2) et une couche de couverture (3) disposée sur un second côté de la couche à base de papier (2) opposé au premier côté, la couche de fond (1) et la couche de couverture (3) présentent une partie imperméable à l'eau et imperméable à l'air recouvrant la cellule de test (21), et la partie de la couche de couverture (3) recouvrant la cellule de test (21) présente un trou d'aération (31) formé en son sein.

2. Puce microfluidique à base de papier selon la revendication 1, dans laquelle la cellule de test (21) est pourvue en son sein de la première région d'angle de contact (211) qui est formée à partir d'un matériau hydrophobe appliqué, déposé ou infiltré, et/ou la cellule de test (21) est pourvue en son sein de la deuxième région d'angle de contact (212) qui est formée à partir d'un matériau hydrophile appliqué, déposé ou infiltré.

3. Puce microfluidique à base de papier selon la revendication 1, dans laquelle une couche hydrophobe est formée dans la cellule de test (21) en appliquant, en déposant ou en infiltrant un matériau hydrophobe dans la cellule de test (21), et la deuxième région d'angle de contact (212) et la première région d'angle de contact (211) entourant la deuxième région d'angle de contact (212) sont formées en appliquant, déposant ou infiltrant un matériau hydrophile sur le dessus de la couche hydrophobe dans une partie centrale de la cellule de test (21).

4. Puce microfluidique à base de papier selon la revendication 1, dans laquelle la deuxième région d'angle de contact (212) est située dans la partie centrale de la cellule de test (21), et la première région d'angle de contact (211) entoure la deuxième région d'angle de contact (212).

5. Puce microfluidique à base de papier selon la revendication 4, dans laquelle la première région d'angle de contact (211) est disposée comme suit : l'angle de contact de l'eau dans la cellule de test (21) augmente dans la première région d'angle de contact (211) depuis la deuxième région d'angle de contact (212) jusqu'à la périphérie de la cellule de test (21).

6. Puce microfluidique à base de papier selon la revendication 1, dans laquelle l'angle de contact avec l'eau de la première région d'angle de contact (211) est supérieur à 60 degrés, de préférence supérieur à 90 degrés, et encore plus de préférence supérieur à 120 degrés.

7. Puce microfluidique à base de papier selon la revendication 1, dans laquelle le trou d'aération (31) est polygonal régulier ou circulaire, et son diamètre ou le diamètre de son cercle circonscrit est de 0,5 mm à 5 mm, de préférence de 1 mm à 3 mm.

8. Puce microfluidique à base de papier selon la revendication 1, dans laquelle la position du trou d'aération (301) sur la couche de couverture (3) est alignée sur la position de la deuxième région d'angle de contact (212) dans la cellule de test (201).

9. Puce microfluidique à base de papier selon la revendication 1, dans laquelle la couche à base de papier (2) est en outre pourvue d'une région de chargement d'échantillon (22) et d'un canal de diffusion (23) reliant la région de chargement d'échantillon (22) à la cellule de test (21) ;
la couche de couverture (3) est pourvue d'un trou de chargement d'échantillon (32) à une position correspondant à la région de chargement d'échantillon (22) ; et
un réactif chromogène est disposé au préalable dans la cellule de test (21) et/ou le canal de diffusion (23).

10. Puce microfluidique à base de papier selon la revendication 1, dans laquelle la couche à base de papier (2) est en outre pourvue d'un réservoir de liquide (24) qui est disposé autour de la cellule de test (21) et utilisé pour réapprovisionner la cellule de test (21) en liquide.

11. Système de test microfluidique, comprenant la puce microfluidique à base de papier selon l'une quelconque des revendications 1 à 10.

12. Système de test microfluidique selon la revendication 11, comprenant en outre une unité de régulation et de commande pour commander un ou plusieurs parmi la température ambiante, le débit d'air, l'humidité et le degré de vide dans la zone où la cellule de test (21) est située.

13. Procédé de test de liquide, comprenant les étapes suivantes :
S1. l'introduction d'un liquide à tester dans une cellule de test (21) de la puce microfluidique à base de papier selon l'une quelconque des revendications 1 à 10 ;
S2. le maintien de la puce microfluidique à base de papier immobile pendant un temps prédéterminé ;
S3. le fait d'effectuer une identification de la chromaticité et/ou une analyse colorimétrique sur une région prédéterminée dans la cellule de test (21).

14. Procédé de test de liquide selon la revendication 13, dans lequel, à l'étape S2, la température ambiante de la zone où la cellule de test (21) est située est comprise entre 25 °C et 60 °C, et/ou l'unité de régulation et de commande est utilisée pour réguler et commander un ou plusieurs de la température ambiante, de l'humidité et du degré de vide dans la zone où la cellule de test (21) est située.
